# EUROPEAN PATENT APPLICATION

(11) **EP 1 601 195 A2**
(43) Date of publication of application: **30.11.2005**
(21) Application number: 05252561.5
(22) Date of filing: 25.04.2005
(51) Int. Cl.: H04N 5/76

(54) **A system and method for providing scheduled live off disk recording for DVR devices**

(30) Priority: 24.05.2004 US 852361
(71) Applicant: GENERAL INSTRUMENT CORPORATION, Horsham, Pennsylvania 19044 (US)
(72) Inventor: Bontempi, Raymond C., Jamison, PA 18929 (US); Folk, Robert H., Narberth, PA 19072 (US)
(74) Representative: McLeish, Nicholas Alistair Maxwell

(57) **Abstract**

The present invention is a system and method for providing scheduled live off disk recording for DVR devices. Characteristics describing selected content scheduled to be broadcast on a first channel is programmed into the DVR device (204) for recording onto the temporary buffer (208). Once the selected content is received from a communications network (202), the DVR device (204) navigates to the scheduled LOD channel planning to receive the selected content. Once tuned to the scheduled LOD channel, the DVR device (204) stores the selected content in a temporary buffer (208). In the event the temporary buffer (208) becomes full, the DVR device (204) receives a full indication, and begins to overwrite the content of the temporary buffer (208) starting from the beginning, such that there is always a full buffer of data. In the event of a channel change, the temporary buffer is purged.

## Description

### FIELD OF THE INVENTION

The present invention relates to the field of communications networks, and more particularly, to a system and method for providing scheduled live off-disk recording of content for DVR devices.

### BACKGROUND OF THE INVENTION

DVR (digital video recorder) devices allow users to record various types of content, while offering several features the users may utilize in conjunction with the content. One feature provided by most DVR devices with respect to content allows the user to schedule certain content for daily recording, such as the daily news, weekly dramas, or movies. With this feature, the user may view the content recorded onto the DVR device at any time after recording.

Another feature provided by DVR devices, referred to as "Live off Disk" (LOD), allows users to pause live television content, and rewind the content for a nominal amount of time on the current channel. LOD content may be subjected to such a rewinding event because LOD content is stored in a temporary buffer, which is used as temporary storage of the content while watching the "live" (i.e. buffered through the storage device) content. Thus, by storing this LOD content in the temporary buffer, this LOD feature allows the user to rewind anywhere within the temporary buffer up to the last channel change before arriving at the LOD content, or to the beginning of the temporary buffer, whichever is less.

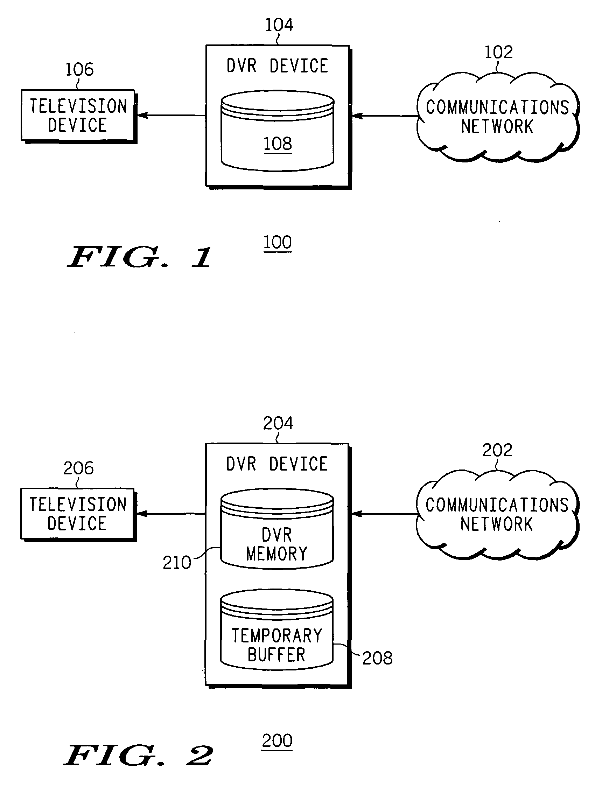

Fig. 1 is a system diagram illustrating an exemplary system providing such features described above in the prior art. System 100 comprises DVR device 104, which is a device for receiving content from communications network 102 and presenting the content to viewing monitor 106. DVR device 104 comprises off disk DVR memory 108 (DVR memory 108), which may comprise any volatile or non-volatile memory capable of storing the content from communications network 102.

In system 100, the user views content broadcast from the communications network 102 via viewing monitor 106. If selected content that the user wishes to view is scheduled for broadcast at a time that the user will may be unable to view the content, the user may schedule a recording session to occur on DVR device 104 when the selected content is broadcast from communications network 102. This time at which the selected content will be broadcast is referred to as the "scheduled broadcast time". At the scheduled broadcast time, the tuner will tune to the channel carrying the selected content and the selected content will be stored into DVR memory 108 within DVR device 104, for later viewing by the user via the viewing monitor 106. While this feature is helpful to those users wishing to view live content at a later time, this feature is proving problematic for DVR users who want to rewind live content that is not desired to be recorded into the DVR memory 108.

Another problem with the current situation is that some content may only be interesting to the user for a short period of time after recording or while the content is being broadcast. For example, if the user schedules the DVR to record the daily news each morning, and doesn't view the recorded daily news for a few days, the user will not be interested in viewing the older instances of the daily news, yet this content will have been permanently stored and occupy disk space. Another example is a baseball game, which loses tremendous value within a few hours of the end of the game, but a user may want to rewind a few innings to start from the beginning. This older content will take up space in the DVR memory until the user specifically deletes it or it sets deletion automatically by the DVR after some time according to deletion schedules known in the art. Thus, the scheduled recording of certain time-sensitive programs results in less disk space being available, which may even preclude other functions such as the recording of other programs which could be considered of higher priority.

Therefore, there is a need in the art for a system and method for providing the scheduling recording of live content in a location other than the DVR memory.

### SUMMARY OF THE INVENTION

The present invention overcomes these and other deficiencies in the prior art by providing a system and method for providing scheduled live off disk recording for DVR devices. A user may choose to configure the DVR to tune to a particular channel at a particular time by entering characteristics describing the selected content, such as the title of the content or the scheduled broadcast time, into the DVR device. If not otherwise engaged in recording into DVR memory, the DVR will tune to the selected content at the scheduled broadcast time and begin filling the temporary buffer. The DVR will stay tuned to that channel until another event occurs (such as a manual channel change or other scheduled recording).

The user will then be able to turn on, at any time, rewind to the beginning or within the temporary buffer to view the content. Otherwise, the temporary buffer will overwrite as normal after the temporary buffer size is exceeded.

### BRIEF DESCRIPTION OF DRAWINGS

For a fuller understanding of the present invention, reference is made to the following description taken in connection with the accompanying drawings, in which:
Fig. 1 is a system diagram illustrating an exemplary system for recording content received from a communications network in the prior art.
Fig. 2 is a system diagram illustrating an exemplary system for scheduling the recording of content received from a communications network in a temporary buffer in accordance with an embodiment of the present invention.
Fig. 3 is a flow diagram illustrating the method of an embodiment of the present invention from the perspective of the DVR device 204.
Fig. 4 is a flow diagram illustrating the simplified method of .an embodiment of the present invention from the perspective of the temporary buffer 208.
Fig. 5 is a flow diagram further illustrating the method of an embodiment of the present invention.

### DETAILED DESCRIPTION OF THE PREFERRED EMBODIMENT

Reference will now be made in detail to the preferred embodiments of the present invention, examples of which are illustrated in the accompanying drawings. Generally, the present invention is a system and method for scheduling the recording of content received from a communications network. More particularly, the present invention is a system and method for scheduling the recording of content received by a DVR device coupled to a communications network into a temporary buffer.

Fig. 2 is a system diagram illustrating an exemplary system for recording content received from a communications network in a temporary buffer in accordance with an embodiment of the present invention. System 200 comprises DVR device 204, which receives a signal comprising content from communications network 202. DVR memory 210, within DVR device 204, may comprise volatile or non-volatile memory, and stores content received from communications network 202.

Temporary buffer 208 within DVR device 204 can be a section of DVR memory 210 allocated to LOD recording or can be a separate storage device. Temporary buffer 208 is coupled to viewing monitor 206 and communications network 202. Some exemplary networks for comprising communications network 202 include, but are not limited to, broadcast television networks, cable television networks, satellite television networks, Ethernet networks, and Internet networks.

Viewing monitor 206 is coupled to DVR device 204, and displays content received by DVR device 204 from communications network 202. Viewing monitor 206 may also be coupled to a user input device (not pictured) for inputting characteristics of desired content, such as the title of the desired content, or the scheduled broadcast time for the desired content.

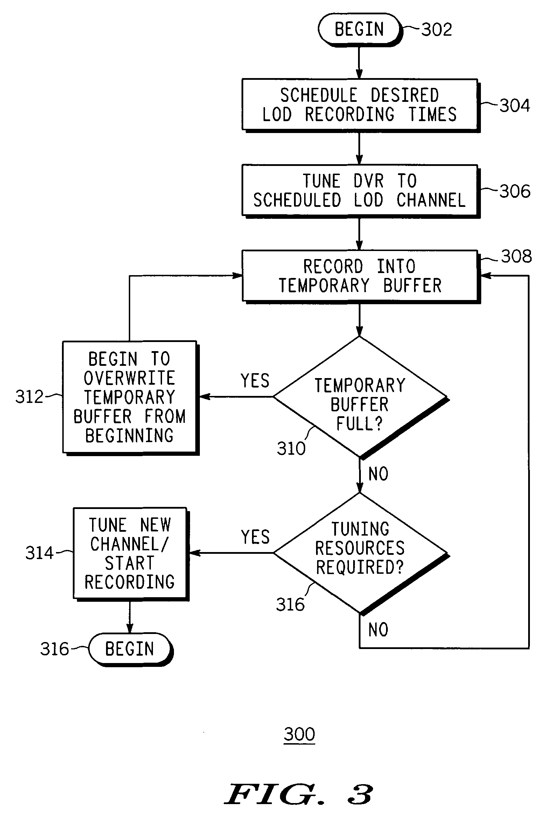

Fig. 3 is a flow diagram illustrating the method of an embodiment of the present invention from the perspective of the DVR device 204. Method 300 begins at step 302 and proceeds to the scheduling of desired LOD recording times at step 304. The scheduling of desired LOD recording times is done in response to receiving content description information from the user via a user input device coupled to the viewing monitor 206. This content description information may include, but is not limited to, the title of the selected content, the scheduled broadcast time, or the characteristics of the selected content (i.e., the 5:00 local news). The scheduled broadcast time is the time at which the selected content is scheduled to be broadcast by the communications network.

At step 306, the DVR device 204 tunes to the channel carrying the selected content at the scheduled broadcast time. At step 308, the selected content is stored in the temporary buffer 208 as it is broadcast.

At step 310, the present invention determines if the temporary buffer 208 is full or not full. If the temporary buffer 208 is determined to be full at step 310, the present invention begins to overwrite the temporary buffer 208 from the beginning at step 312, and returns to recording content into the temporary buffer 208 at step 308.

If the temporary buffer 208 is not determined to be full at step 310, the present invention determines if the tuning resources of DVR device 204 are required for other functions, such as a channel change event or for recording higher priority content such as content to be stored on the DVR memory 210. If such tuning resources are determined to be required at step 316, the temporary buffer 208 is flushed, and the tuning resources are utilized in their required manner, such as to effectuate the channel change event. Method 300 then concludes at step 318.

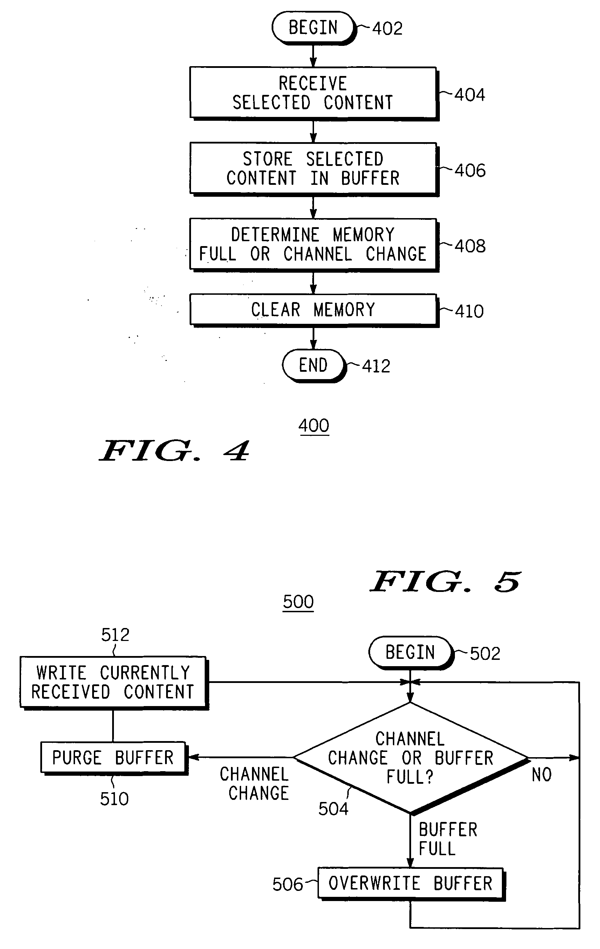

Fig. 4 is a flow diagram illustrating the simplified method of an embodiment of the present invention from the perspective of the temporary buffer 208. Method 400 begins at step 402, and proceeds to the receipt of selected content broadcast on the scheduled LOD channel at step 404.

At step 406, the temporary buffer 208 stores the selected content. As discussed in the explanation of Fig. 2, this step 406 may involve storing the selected content in either volatile or non-volatile memory.

At step 408, the temporary buffer 208 determines that there is not any room in the temporary buffer 208 to store any further content. Alternatively, the temporary buffer 208 may receive an indication that a channel change event has occurred at step 408. A channel change event comprises the user, or a device coupled to the viewing monitor 206 or DVR device 204, has turned the channel to a channel other than the scheduled LOD channel, and may be a channel change event in response to a scheduled recording into DVR memory 210.

At step 410, the temporary buffer 208 deletes the entirety of the content stored in the temporary buffer 208 if a channel change event has occurred. Thus, after step 410, the temporary buffer 208 is free to record more selected content 420. Alternatively, if the temporary buffer 208 is determined to be full at step 408, the temporary buffer continues to record the selected content, but overwrites the selected content already recorded at the beginning of the temporary buffer 208. Thus, only the most current selected content is recorded into the temporary buffer 208 at step 420.

Fig. 5 is a flow diagram further illustrating the method of an embodiment of the present invention. Method 500 begins at step 502 and proceeds to the decision block 504, wherein the present invention determines if: 1) a channel change event has occurred on television device 206, or if 2) temporary buffer 208 is full.

If a channel change event has occurred, method 500 proceeds to stop 510, wherein the temporary buffer 208 is purged of all content. In the preferred embodiment, this involves deleting all the content in temporary buffer 208. The content on the new channel after the channel change event is then written to the temporary buffer 208 at step 512.

If the temporary buffer 208 is determined to be full at step 504, the temporary buffer is overwritten at step 506 with content as it is received by DVR device 204. In the preferred embodiment, this step 506 comprises overwriting the temporally oldest content in temporary buffer 208 with the temporally newest content received from communications network 202.

Alternatively, if there is no channel change event at step 504, nor is the temporary buffer full at step 504, then method 500 loops, repeating step 504 until either event occurs. This method 500 executes continuously while television device 206 is powered on.

In the description herein, numerous specific details are provided, such as examples of components and/or methods, to provide a thorough understanding of embodiments of the present invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

A "computer-readable carrier" for purposes of embodiments of the present invention may be any medium or transmission that can contain, store, communicate, propagate, or transport the program for use by or in connection with the instruction execution system, apparatus, system or device. The computer readable carrier can be, by way of example only but not by limitation, an electronic, magnetic, optical, electromagnetic, infrared, or semiconductor system, apparatus, system, device, propagation medium, or computer memory.

A "processor" or "process" includes any human, hardware and/or software system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real time," "offline," in a "batch mode," etc. Portions of processing can be performed at different times and at different locations, by different (or the same) processing systems.

Reference throughout this specification to "one embodiment", "an embodiment", or "a specific embodiment" means that a particular feature, structure, or characteristic described in connection with the embodiment is included in at least one embodiment of the present invention and not necessarily in all embodiments. Thus, respective appearances of the phrases "in one embodiment", "in an embodiment", or "in a specific embodiment" in various places throughout this specification are not necessarily referring to the same embodiment. Furthermore, the particular features, structures, or characteristics of any specific embodiment of the present invention may be combined in any suitable manner with one or more other embodiments. It is to be understood that other variations and modifications of the embodiments of the present invention described and illustrated herein are possible in light of the teachings herein and are to be considered as part of the spirit and scope of the present invention.

Embodiments of the invention may be implemented by using a programmed general purpose digital computer, by using application specific integrated circuits, programmable logic devices, field programmable gate arrays, optical, chemical, biological, quantum or nanoengineered systems, components and mechanisms may be used. In general, the functions of the present invention can be achieved by any means as is known in the art. Distributed or networked systems, components and circuits can be used. Communication, or transfer, of data may be wired, wireless, or by any other means.

Additionally, any signal arrows in the drawings/Figures should be considered only as exemplary, and not limiting, unless otherwise specifically noted. Furthermore, the term "or" as used herein is generally intended to mean "and/or" unless otherwise indicated. Combinations of components or steps will also be considered as being noted, where terminology is foreseen as rendering the ability to separate or combine is unclear. The foregoing description of illustrated embodiments of the present invention, including what is described in the abstract, is not intended to be exhaustive or to limit the invention to the precise forms disclosed herein. While specific embodiments of, and examples for, the invention are described herein for illustrative purposes only, various equivalent modifications are possible within the spirit and scope of the present invention, as those skilled in the relevant art will recognize and appreciate. As indicated, these modifications may be made to the present invention in light of the foregoing description of illustrated embodiments of the present invention and are to be included within the spirit and scope of the present invention.

Thus, while the present invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the present invention. It is intended that the invention not be limited to the particular terms used in the following claims and/or to the particular embodiment disclosed as the best mode contemplated for carrying out this invention, but that the invention will include any and all embodiments and equivalents falling within the scope of the appended claims.

## Claims

1. A method of scheduling the storage of selected content in a LOD buffer in a DVR device, said method comprising the steps of:
navigating to selected content at a scheduled broadcast time by tuning to a channel providing the selected content;
storing selected content in a temporary buffer;
receiving an indication regarding the temporary buffer; and,
deleting at least a portion of the selected content stored in the temporary buffer.

2. The method of Claim 1, wherein said DVR device is currently tuned to the channel providing the selected content, and said navigating to selected content step comprises remaining on the channel.

3. The method of Claim 1, wherein said DVR device is currently tuned to a second channel, and wherein said navigating to selected content step comprises tuning to the channel providing the selected content from the second channel at the scheduled broadcast time.

4. The method of Claim 1, wherein receiving an indication regarding the temporary buffer comprises receiving an indication that a channel change event has occurred.

5. The method of Claim 1, wherein deleting at least a portion of the selected content stored in the temporary buffer comprises deleting all selected content in the temporary buffer after the channel change event.

6. The method of Claim 1, wherein receiving an indication regarding the temporary buffer comprises receiving an indication that the temporary buffer is full.

7. The method of Claim 1, wherein deleting at least a portion of the selected content stored in the temporary buffer comprises overwriting the selected content stored in the temporary buffer starting at the beginning of the temporary buffer.

8. A method for storing selected content received on a scheduled LOD channel from a communications network, said method comprising the steps of:
scheduling the recording of selected content on the scheduled LOD channel;
tuning to the scheduled LOD channel at the scheduled broadcast time; and
recording said selected content to a temporary buffer.

9. The method of Claim 8, wherein said scheduling the recording of selected content for the scheduled broadcast time step comprises scheduling the recording of selected content for the scheduled broadcast time based on content description information.

10. The method of Claim 9, wherein said scheduling the recording of selected content for the scheduled broadcast time based on content description information comprises scheduling the recording of selected content for the scheduled broadcast time based on the title of the selected content.

11. The method of Claim 9, wherein said scheduling the recording of selected content for the scheduled broadcast time based on content description information comprises scheduling the recording of selected content for the scheduled broadcast time based on the characteristics of the selected content.

12. A system for storing selected content received on a scheduled LOD channel from a communications network, said system comprising:
a temporary buffer;
a DVR device comprising a DVR memory and communicatively coupled to said temporary buffer;
a viewing monitor communicatively coupled to said DVR device;
a communications network communicatively coupled to said DVR device;
wherein said DVR device navigates to the scheduled LOD channel, stores selected content in a temporary buffer; receives an indication regarding the temporary buffer; and, deletes the selected content stored in the temporary buffer.

13. The system of Claim 12, wherein said temporary buffer is a LOD off-disk memory buffer.

14. The system of Claim 12, wherein said selected content comprises live television content.

15. The system of Claim 12, wherein said communications network comprises a cable television network.

16. A computer-readable carrier including computer program instructions that instruct a computer to perform the steps of:
scheduling the recording of selected content on the scheduled LOD channel;
tuning to the scheduled LOD channel at the scheduled broadcast time; and
recording said selected content to a temporary buffer.

17. The method of Claim 16, wherein said scheduling the recording of selected content for the scheduled broadcast time step comprises scheduling the recording of selected content for the scheduled broadcast time based on content description information.

18. The method of Claim 17, wherein said scheduling the recording of selected content for the scheduled broadcast time based on content description information comprises scheduling the recording of selected content for the scheduled broadcast time based on the title of the selected content.

19. The method of Claim 17, wherein said scheduling the recording of selected content for the scheduled broadcast time based on content description information comprises scheduling the recording of selected content for the scheduled broadcast time based on the characteristics of the selected content.

20. An apparatus for recording content in a digital video recording device, comprising:
a digital video recorder having a temporary buffer;
a programming device for programming the DVR to tune to a particular channel based on input criteria to record selected content;
wherein the DVR records the selected content into the temporary buffer.

21. The apparatus of Claim 20, wherein the temporary buffer is a LOD off-disk memory buffer.

22. The apparatus of Claim 20, wherein said programming device comprises a remote control.

23. The apparatus of Claim 20, further comprising a menu driven guide for selecting input criteria.
